# EUROPEAN PATENT SPECIFICATION

(11) **EP 3 116 938 B1**
(45) Date of publication and mention of the grant of the patent: **14.02.2018**
(21) Application number: 14795882.1
(22) Date of filing: 25.09.2014
(51) Int. Cl.: C08H 8/00, C08L 1/04

(54) **METHOD FOR THE PRODUCTION OF NANOCRYSTALLINE CELLULOSE**
METHODE ZUR HERSTELLUNG NANOKRISTALLINER ZELLULOSE
PROCÉDÉ POUR LA PRODUCTION DE LA CELLULOSE NANOCRISTALLINE

(30) Priority: 12.03.2014 SI 201400097
(43) Date of publication of application: 18.01.2017
(73) Proprietor: Kemijski Institut, 1000 Ljubljana (SI)
(72) Inventor: KUNAVER, Matjaz, 1000 Ljubljana (SI); KOS, Tomaz, 4201 Zgornja Besnica (SI); ANZLOVAR, Alojz, 1290 Grosuplje (SI); ZAGAR, Ema, 4000 Kranj (SI); HUSKIC , Miroslav, 1356 Dobrava (SI)
(74) Representative: Macek, Gregor
(86) International application number: PCT/SI2014/000053
(87) International publication number: WO 2015/137888

(56) References cited:
- WO-A1-2012/150043
- L. BRINCHI ET AL: "Production of nanocrystalline cellulose from lignocellulosic biomass: Technology and applications", CARBOHYDRATE POLYMERS, vol. 94, no. 1, 1 April 2013 (2013-04-01), pages 154-169, XP055169241, ISSN: 0144-8617, DOI: 10.1016/j.carbpol.2013.01.033

## Description

### FIELD OF INVENTION

The present invention relates to methods for the production of nanocrystalline cellulose (NCC) from cellulose-containing starting materials.

### BACKGROUND

Nanocrystalline cellulose is a polycrystalline cellulose material with crystals having a smallest dimension, or diameter, in the nanometers range.

Processes for the isolation of nanocrystalline cellulose from natural sources containing cellulose are generally known:
"Isolation of nanocellulose from waste sugarcane bagasse (SCB) and its characterization", A. Mandal, D. Chakrabarty: Carbohydrate Polymers 86 (2011) 1291-1299. Dried and ground bagasse was first bleached to remove lignin, then boiled in sodium hydroxide solution to remove hemicelluloses and finally hydrolyzed with 60% sulfuric acid at 50°C for 5 hours. The product was centrifuged and washed several times with water. The suspension of nanocrystalline cellulose was sonicated at the end of process.

"Maximizing the yield of nanocrystalline cellulose from cotton pulp fiber" by J. Fan,Y. Li: Carbohydrate Polymers 88 (2012) 1184-1188. nanocrystalline cellulose was prepared from cotton pulp fiber. The maximum yield of 60% was achieved by using 64% sulfuric acid at 50°C and the reaction time was 5 hours.

"Preparation and characterization of cellulose nanowhiskers from cotton fibres by controlled microbial hydrolysis", P. Satyamurthy, P. Jain, R. H. Balasubramanya, N. Vigneshwaran: Carbohydrate Polymers 83 (2011) 122-129. A cellulolytic fungus was used to prepare nanocrystalline cellulose by controlled hydrolysis of microcrystalline cellulose. The yields were up to 22%. No sulfation on the surface of nanocrystalline cellulose occurred.

"Production of nanocrystalline cellulose from lignocellulosic biomass: Technology and applications", L. Brinchi, F. Cotana, E. Fortunati, J.M. Kenny: Carbohydrate Polymers 94 (2013) 154-169. Nanocrystalline cellulose is prepared from lignocellulosic biomass contain biomass by chipping or milling, pulping or steam explosion treatment, followed by strong acid hydrolysis, centrifugation, dialysis and sonification. 64% (wt.) sulfuric acid is used in most cases, although some variations in acid concentration, duration of the reaction and reaction temperature were applied.

"Preparation and characterization of bamboo nanocrystalline cellulose", Yu et al.: BioResources 7(2) (2012) 1802-1812. Bamboo pulp was pretreated with sodium hydroxide, followed by hydrolysis using 48% (wt.) sulfuric acid at 50°C. The yield was 15.7% (wt.).

Many of the above described methods utilize acid hydrolyzation with strong sulfuric acid under relatively harsh conditions. Such processes produce large quantities of waste material, including the surplus acid. Methods employing microbial hydrolysis lead to a relatively clean process, however, it requires microcrystalline cellulose as a starting material and it takes several days to obtain the product.

WO 2012/127110 A1 describes the process for preparing micro- and nanocrystalline cellulose in the presence of acid in a gas phase. The pre-treatment is performed by grinding or fluidizing with suitable equipment.

Complete liquefaction of wood using organic solvents, such as glycol and glycerol, in the presence of p-toluene sulfonic acid as an acid catalyst is described in WO 2012/150043. The production of nanocrystalline cellulose is not mentioned.

Jasiukaityte-Grojzdek at al. (2012, BioResources 7(3), 3008-3027) describe a process for the liquefaction of wood comprising dissolving the lignocellulosic starting material in a mixture of ethylene glycol and p-toluene sulfonic acid (PTSA). A non-liquefied "cellulose residue" is mentioned and characterized. The purification method does not include a dilution step with a second organic solvent, e.g. 1,4-dioxan. Instead, the suspension is diluted with distilled water. The present inventors have found that addition of water to the suspension of nanocrystalline cellulose leads to aggregation and agglomeration of the nanocrystals, in particular, when the cellulose concentration in the suspension is relatively high (e.g., 5wt% or higher). Such aggregation and agglomeration is generally undesired, since many of the unique properties of nanocrystalline cellulose are lost.

In view of the above discussed prior art, it is an object of the invention to provide methods of producing nanocrystalline cellulose from solid starting materials, wherein the aggregation and/or agglomeration of the cellulose crystals is avoided or reduced. It is another object of the invention to produce a homogenous suspension of nanocrystalline cellulose, wherein the suspension may contain a relatively high concentration of the nanocrystalline cellulose, and nonetheless only little or no aggregation or agglomeration occurs.

### SUMMARY OF THE INVENTION

The present invention is based on the unexpected finding that very homogenous suspensions of Nanocrystalline cellulose can be obtained from cellulose-containing starting materials by incubation with a first solvent mixture comprising a first organic solvent and an acid catalyst, and subsequent addition of a second solvent mixture comprising a second organic solvent but no or only a small amount of water. The homogenous suspension of nanocrystalline cellulose preferably shows no visible signs of aggregation or agglomeration.

A first aspect of the invention relates to a method for the production of nanocrystalline cellulose from a cellulose-containing starting material, said method comprising (a) contacting said starting material with a first solvent mixture comprising at least one first organic solvent and an acid catalyst, preferably for a period of time sufficient to dissolve components of said starting material other than nanocrystalline cellulose in said solvent mixture, thereby obtaining nanocrystalline cellulose dispersed in a dissolution mixture; (b) adding a second solvent mixture to said nanocrystalline cellulose dispersed in a dissolution mixture, said second solvent mixture comprising at least one second organic solvent and less than e.g. 5% (wt.) water. Thereby one obtains nanocrystalline cellulose in a diluted dissolution mixture. The method may further comprise separating the nanocrystalline cellulose from said diluted dissolution mixture by filtration or by centrifugation.

Importantly, in accordance with the present invention, the second solvent mixture contains only a small amount of water, e.g., less than 5% (wt.) of the second solvent mixture. It has surprisingly been found by the present inventors that the low content of water in the second solvent mixture leads to a very low degree of aggregation and/or agglomeration in the nanocrystalline cellulose suspension obtained. A homogenous suspension is so obtained. The homogenous suspension preferably shows no visible signs of aggregation or agglomeration of cellulose crystals in the suspension.

In certain embodiments, also the first solvent mixture has a low water content, e.g., less than 10% (wt.), or less than 5% (wt.), or less than 2.5% (wt.).

A second aspect of the invention thus relates to a method of producing a homogenous suspension of nanocrystalline cellulose including the method steps defined herein. Preferably, the homogenous suspension is substantially free of aggregates and/or agglomerates of nanocrystalline cellulose, *e.g*., it shows no visible signs of aggregation or agglomeration. Visible shall mean "visible by the naked eye".

In advantageous embodiments the suspension produced by methods of the invention contains a relatively large weight fraction of nanocrystalline cellulose, *e.g*., 5% (wt.) or above. The production of suspensions containing a relatively high concentration of nanocrystalline cellulose, but nevertheless showing no signs of aggregation and/or agglomeration, was heretofore not possible.

The first solvent mixture according to the invention is, or comprises at least one of, ethylene glycol, diethylene glycol and glycerol. For example, the first solvent mixture may consist of, or comprise, (i) ethylene glycol, (ii) diethylene glycol, (iii) glycerol, (iv) PEG, such as PEG400, (v) any mixture of "(i)" to "(iv)" above, (vi) a mixture of ethylene glycol and glycerol, (vii) a mixture of diethylene glycol and glycerol, or (viii) a mixture of ethylene glycol, diethylene glycol and glycerol.

The second organic solvent is preferably (or comprises) 1,4-dioxan. In some embodiments, the second solvent mixture consists of 1,4-dioxan.

The second solvent mixture has also a low water content, such as a water content of less than 10% (wt.) of water, or 5% (wt.) of water, or more preferably less than 2.5% (wt.) of water, 1% (wt.) of water, all relative to the total weight of the first solvent mixture, or (substantially) no water.

The first solvent mixture may also have a low water content, such as a water content of less than 10% (wt.) of water, or 5% (wt.) of water, or more preferably less than 2.5% (wt.) of water, 1% (wt.) of water, all relative to the total weight of the first solvent mixture, or (substantially) no water.

The acid catalyst may be any suitable acid. Preferably, the acid catalyst is or comprises (i) a sulfonic acid having the general structure HO-SO₂-R, wherein R is an organic moiety; (ii) methane sulfonic acid (MSA), or (iii) toluene sulfonic acid, such as p-toluene sulfonic acid.

In a preferred embodiment, the first solvent mixture consists of a mixture of ethylene glycol and methane sulfonic acid.

The relative amount of the acid catalyst in said first solvent mixture is preferably from 0.5% (wt.) to 20% (wt.), or from 1% (wt.) to 10% (wt.), or from 2% (wt.) to 5% (wt.), relative to the total weight of the first solvent mixture.

In one embodiment, said solid starting material is, or comprises at least one of, wood, wood sawdust, paper, straw, hay, plant fibers, cellulose fibers, cotton fibers and bagasse.

The weight ratio of said starting material to said first solvent mixture is preferably from 1:1 to 1:50, or from 1:1 to 1:20, or from 1:4 to 1:20 by weight, respectively.

The solid starting material is advantageously in form of particles, wherein preferably at least 90% (wt.) of the particles have a particle size of 20 mm or less, or 10 mm or less, or 5 mm or less.

The contacting is preferably at a temperature of from 100°C to 200°C, or even more preferred from 120°C to 160°C. Other temperature ranges are however possible. In certain embodiments, the contacting is for a time period of from 1 to 1000 minutes, or from 10 to 300 minutes, or most preferably from 30 to 100 minutes.

In preferred embodiments, the contacting step involves mixing by a mixer.

The method may further comprises at least one washing step. The washing step comprises washing the nanocrystalline material with a washing agent. Any suitable solvent miscible with water may be used as the washing agent. A preferred washing agent, however, is 1,4-dioxane. A first washing step is preferably performed after the contacting/dissolution step (a). A washing step may comprise (i) addition of the washing agent, (ii) an (optional) mixing step, and (iii) subsequent centrifugation or filtration.

The method of the invention preferably comprises at least one centrifugation step, thereby obtaining centrifuged nanocrystalline cellulose product.

Preferably, the produced nanocrystalline cellulose is in form of particles having an average particle size by number (*i.e.,* an average length) of from 10 to 5000 nm, or 50 to 1000 nm, or preferably from 100 nm to 500 nm.

More importantly, at least 90%(by number) of the fibers of the nanocrystalline cellulose preferably have a width of 100 nm or less, or 50 nm or less, or 20 nm or less, or 10 nm or less, or 5 nm or less. In other preferred embodiments, the produced nanocrystalline cellulose is in form of particles having an average particle width by number of from 1 nm to 50 nm, preferably 5 nm to 15 nm.

A third aspect of the invention relates to the use of a first solvent mixture and a second solvent mixture according to the invention for producing nanocrystalline cellulose from a cellulose-containing starting material as described hereinabove and below.

A fourth aspect of the invention relates to a kit for producing nanocrystalline cellulose, said kit comprising a cellulose-containing starting material, a first solvent mixture and a second solvent mixture according to the invention. Such kits are particularly useful for the production of nanocrystalline cellulose at any scale of production.

The invention also relates to the nanocrystalline cellulose produced by methods and processes of the invention.

### DETAILED DESCRIPTION OF THE INVENTION

"Cellulose", in accordance with the present invention, shall be understood to be the organic compound with the formula (C₆H₁₀O₅)ₙ, in particular to a polysaccharide consisting of a linear chain of a plurality (e.g., more than 100, or more than 1000) β(1→4) linked D-glucose units.

In the context of the present invention, "nanocrystalline cellulose" (NCC) is a crystalline cellulose comprising cellulose particles (i.e., fibers), wherein at least 90% by number of the particles have a width of 100 nm or less, preferably of 50 nm or less, or 10 nm or less. Alternatively, at least 70%, or 80%, or 99% of the cellulose particles have a width of 100 nm or less, or 50 nm or less, or 10 nm or less. In another embodiment, at least 70%, or 80%, or 90%, or 99% of the particles are from 5 to 100 nm in width. In yet another embodiment, at least 70%, or 80%, or 90%, or 99% of the particles are from 5 to 50 nm in width. In yet another embodiment, at least 70%, or 80%, or 90%, or 99% of the particles are from 5 to 20 nm wide. The width of the fibers is preferably determined by transmission electron microscopy (TEM). Nanocrystalline cellulose according to the invention may have an apparent crystallinity of 50% or above, or 60% or above, or least 70% or above, or 80% or above. The length of the nanocrystalline fibers according to the invention may be 1000 nm or less, or 500 nm or less. Suspensions of nanocrystalline cellulose, according to the invention, are preferably in form of a colloidal suspension, or a stable colloidal suspension, of nanocrystalline cellulose. A colloid, in this context, shall be understood as a composition in which one substance is microscopically dispersed throughout another substance or solvent.

"Aggregation", in the context of the present invention, refers to formation of clusters in a suspension of particles, e.g., in a colloidal suspension of cellulose particles. It represents the most frequent mechanism leading to destabilization of colloidal systems. When aggregation occurs, dispersed particles in the liquid phase stick to each other, and spontaneously form irregular particle aggregates. Aggregation can be induced, *e.g.,* by changing properties of the liquid phase of the suspension, *e.g*., by adding salts or other chemicals. Depending on the nature of the suspended particles, aggregation may also be induced by changing the polarity of the liquid phase. Aggregation is normally the result of attractive Van-der-Waals forces between particles, and is often an irreversible process. Once particle aggregates have formed, they will not easily disrupt. In the course of aggregation, the aggregates will grow in size, and as a consequence they may settle to the bottom of the container, which is referred to as sedimentation.

"Agglomeration", in the context of the present invention, is synonymous to agglomeration, thus relates to the process of contact and adhesion of suspended particles, whereby the particles of the dispersion form larger-size clusters (UPAC definition).

The expression "showing visible signs of aggregation", with respect to a suspension, or colloidal suspension, shall be understood to mean that no irregular aggregates are visible in the suspension, when viewed by the naked eye. Increased viscosity of a fluid, in the context of the present invention, shall not by itself be regarded as a "visible sign of aggregation". A viscous homogenous suspension thus shows no visible signs of aggregation.

Likewise, the expression "showing visible signs of agglomeration", with respect to a suspension, or colloidal suspension, shall be understood to mean that no irregular agglomerates are visible in the suspension, when viewed by the naked eye. Increased viscosity of a fluid, in the context of the present invention, shall not by itself be regarded as a "visible sign of agglomeration". A viscous homogenous suspension thus shows no visible signs of agglomeration.

"Crystallinity" of a cellulose-containing material, or "apparent crystallinity", in the context of the present invention, is the relative amount (wt/wt) of cellulose in crystal form in a cellulose-containing material. The apparent crystallinity, according to the present invention, is preferably determined by the "X-ray diffraction peak height method" described by Terinte *et al.* (2011) in Lenzinger Berichte 89, pp. 118-131.

A "particle size", according to the invention, shall be understood as being the length of the longest possible straight line (or distance) across the particle. If the particle is a fiber, the particle size is the fiber length. The particle size can be determined, *e.g*., from photographs, e.g., microphotographs.

The "particle width", or "fiber width", of a nanocrystalline material according to the invention may be expressed as the percentage (by number) of particles having a particle width of less than X nm (X being a number). For example, the particle width distribution of a sample may be characterized in that at least 90% by number of the particles of the sample have a width of X nm or below. The percentage may be determined from transmission electron microscopy, e.g., from a TEM microphotograph. A straight line is drawn on a TEM image of a representative sample of the nanocrystalline material, the straight line intersecting at least 10, 20 or 100 particles (*i.e*., fibers) in the microphotograph. The microphotograph preferably includes an internal scale. At least 10, 20, or 100 consecutive intersecting particles are then marked with a pen or other suitable means in the microphotograph. The thickness of each marked particle is measured as the lateral dimension perpendicular to the longitudinal axis of the particle in the point of intersection with the straight line, *e.g*., by comparison with the internal scale. The percentage (by number) of particles having a width of X nm or below is determined from the counted number of fibers having a width of X nm or below, relative to the total number of particles measured.

The present invention is based on the finding that homogenous suspensions of nanocrystalline cellulose can be produced from lignocellulosic starting materials, by dissolving the non-crystalline components of the starting material in a first solvent mixture comprising a first organic solvent and an acid catalyst, at a temperature and for a period of time sufficient to dissolve non-crystalline cellulose components and other components, diluting the so-obtained dissolution mixture with a second solvent mixture comprising an organic solvent and only little water, and thereafter purifying suspended nanocrystalline cellulose particles using centrifugation and/or filtration steps.

Aspects of the invention relate to methods of producing nanocrystalline cellulose from a cellulose-containing starting material by contacting and incubating a cellulose-containing starting material with a first solvent mixture, which first solvent mixture comprises a first organic solvent, such as ethylene glycol (EG), and an acid catalyst, such as methane sulfonic acid (MSA). The method advantageously comprises subsequent dilution of the so-obtained dissolution mixture with a second solvent mixture comprising a second organic solvent, e.g., 1,4-dioxan. A subsequent filtration or centrifugation step may be performed.

Importantly, at least the second solvent mixture comprises a minimum of or no water. For example, the second solvent mixture of the invention may comprise less than 0.5% (wt.), 1% (wt.), 2% (wt.), 3% (wt.), 4% (wt.), 5% (wt.), 6% (wt.), 7% (wt.), 8% (wt.), 9% (wt.), or 10% (wt.) of water. Preferably, the second solvent mixture also comprises less than 0.5% (wt.), 1% (wt.), 2% (wt.), 3% (wt.),4% (wt.), 5% (wt.), 6% (wt.), 7% (wt.), 8% (wt.), 9% (wt.), or 10% (wt.) of polar organic solvents, or of ethanol.

Methods of the invention are relatively fast. Unlike other methods of producing the nanocrystalline cellulose the method does not include a fermentation step, which requires significantly more time. Instead, the method for making nanocrystalline cellulose includes a chemical reaction process in which amorphous cellulose, hemicellulose and lignin are dissolved and depolymerized in the first solvent mixture, while nanocrystalline cellulose remains solid and suspended in crystalline form. After dilution with a second solvent mixture the crystalline cellulose may be isolated from the reaction mixture, e.g., by a centrifugation or a filtration step.

The dilution step using the second solvent mixture not only reduces the viscosity of the dissolution mixture, but - when the appropriate second solvent mixture is used - effectively avoids aggregation and agglomeration of the product.

Advantageous embodiments employ a weight ratio of the cellulose-containing starting material to the first organic solvent (*e.g*. ethylene glycol) of from 1:1 to 50:1, or from 1:1 to 1:20, or 1:4 to 1:20 by weight. The relative amount of acid catalyst (*e.g*., MSA) in the first solvent mixture may range from 0.5 to 20% (wt.), preferably from 1 to 10% (wt.), relative to the weight of the first organic solvent in said first solvent mixture. In other embodiments, the amount of acid catalyst in the mixture may be from 0.5 to 10% (wt.), more preferably 2 to 5% (wt.) of the weight of the first organic solvent.

Without wishing to be bound by theory, the acid catalyst catalyzes the dissolution of the amorphous cellulose in the first organic solvent, hence, it may be regarded as a chemical enhancer of the dissolution process.

Any cellulose-containing starting material can in principle be used. The starting material, however, preferably comprises (or consist of) lignocellulosic material, such as wood, wood sawdust, paper, waste paper, straw, hay, plant fibers, cellulose fibers, cotton fibers, or bagasse. Preferred starting materials are cotton, paper or purified cellulose fibers, such as microcrystalline cellulose fibers.

The starting material is preferably in form of particles. At least 90% (wt.), or at least 95% (wt.), or at least 99% (wt.) of the particles may have a particle size of 10 mm or less. A relatively small particle size provides an advantageous surface-to-volume (or surface-to-mass) ratio. The solid materials may thus be cut or milled to particles of 10 mm or less in size, prior to contacting with the mixture of first organic solvent and acid catalyst. This leads to better mixing and distribution in the mixture. If cotton fibers are used, due to their small width, these may have a particle size (*i.e*., length) of more than 10 mm.

In accordance with the invention, the temperature at contacting with the first solvent mixture (i.e., the reaction temperature) is preferably between 80°C and 250°C, or 120°C and 160°C, most preferably 140°C to 155°C. A higher reaction temperature results in a faster reaction rate, but may also lead to complete dissolution of the cellulose. At a lower reaction temperature, the reaction may not proceed at an appropriate speed.

The dissolution of the non-crystalline components (*i.e*., the contacting step) may proceed for a time period of 10 minutes to 300 minutes, or from 30 to 200 minutes. The contacting preferably takes place at atmospheric pressure. The reaction, however, can also proceed at 50-500 kPa, preferably at 100-200 kPa.

The contacting may take place in a conventional closed reactor vessel, *e.g*., a vessel made from an inert material, such as a stainless steel or glass vessel. The reactor may be a standard reactor and may comprise internal mixing means, such as a mixer, or a stirrer. The reaction preferably takes place under mixing, *i.e.,* the solid starting material, the first organic solvent and the acid catalyst are blended with a mixer. Preferably the vessel used in accordance with the invention, is equipped with a condenser. The condenser then serves to capture waste vapor.

The microcrystalline cellulose product may be further purified by one or several washing - steps. Washing comprises suspension or dilution of the nanocrystalline material in a washing agent and subsequent centrifugation or filtration of the dispersed particles. A preferred washing agent is 1,4-dioxane, *i.e.,* the same agent as is preferably used to dilute the dissolution mixture in the first place. However, any other suitable water miscible organic solvent may be used as the washing agent, provided that it contains only little water, e.g. less than 10%, or less than 5%, or less than 2.5%, or less than 1% by weight relative to the weight of the washing agent, respectively.

A washing cycle advantageously includes (re-)suspension of nanocrystalline cellulose in an amount of washing agent which corresponds to from 10 to 1000% (wt.), or from 50 to 200% (wt.), relative to the weight of the wet nanocrystalline cellulose (*i.e*., weight of the pellet), and a subsequent centrifugation or filtration step.

Centrifugation may be performed in an ultracentrifuge at 5,000 to 10,000 g for 5 to 60 minutes, e.g., 10 to 30 minutes. The supernatant is separated from the sedimented nanocrystalline cellulose, *e.g*., by decantation. The supernatant comprises the washing agent and any remaining dissolved starting material or solvents.

Washing is preferably repeated until a clear supernatant is obtained. This may take one to five washing cycles. In many cases 3 washing cycles provide good results. The sedimented product (centrifugate, pellet) is purified nanocrystalline cellulose.

In a preferred embodiment, at least the first washing cycle involves re-suspension of the crystalline cellulose in 1,4-dioxane, and at least one subsequent washing cycle involves re-suspension of the crystalline product in another water-miscible (preferably organic) washing agent according to the invention.

The final product is advantageously obtained in form of a suspension of nanocrystalline cellulose in the washing agent, however, it may also be obtained in form of a sedimented product (*e.g.,* a pellet), or it may be dried, *e.g*., lyophilized.

It is one advantage of the inventive methods that the acid catalyst is only used in relatively small amounts. For example, only 2% to 5%wt of the acid catalyst need be present in the first solvent mixture (relative to the weight of the organic solvent in the first solvent mixture). A major portion of the mixture is thus the organic solvent. Since the organic solvent is normally a low cost product, this makes the methods of the invention particularly cost efficient.

The further advantage of the methods of the present invention is that a surprisingly large part of the cellulose originally present in the starting material, *e.g.,* 70 to 95% (wt.), can be recovered in nanocrystalline form.

Yet another advantage of the present invention is that purification of the product from the reaction mixture is simple and straight forward, since it only requires re-suspension in solvent and centrifugation steps.

Most importantly, however, suspensions of nanocrystalline cellulose obtained according to the invention will show no or little agglomeration and/or aggregation.

The invention shall now be described with reference to the following examples, which shall not be construed as limiting the scope invention.

### EXAMPLE 1 - Nanocrystalline cellulose from paper

500 ml glass reactor vessel with attached mixer and condenser was charged with 200 g of ethylene glycol (EG). 6 g of methyl sulfonic acid (MSA) was also added to form a first solvent mixture. The first solvent mixture was heated to 140°C. 10g of Whatman filter paper (cut to 10 x 10 mm pieces) was added while mixing. The dissolution reaction took place at constant temperature of 140°C to 150°C for 120 minutes under constant stirring. After 2 hours the resulting dissolution mixture was cooled to room temperature.

The dissolution mixture was diluted with 1,4-dioxane (1:1 by volume) and centrifuged at 8500 RCF (Relative Centrifugal Force) for 15 minutes in a Hettich Universal 320 Centrifuge (Hettich GmbH, Tuttlingen, Germany). The supernatant containing the first solvent mixture, dissolved paper components and 1,4-dioxane was decanted and discarded.

The sediment was re-suspended in 200 g of 1,4-dioxane and centrifuged as above (first washing cycle). Two further washing cycles were carried out. The final pellet was re-suspended in 1,4-dioxane and a white suspension of nanocrystalline cellulose in 1,4-dioxane was obtained. No visible signs of aggregation or agglomeration of the nanocrystalline cellulose particles in the suspension (such as visible sedimentation) were observed. The fact that no agglomeration or aggregation occurred was confirmed by electron microscopy.

The product yield of the method was 46% of nanocrystalline cellulose contained in the starting material (based on the total cellulose content of the filter paper and a measured apparent crystallinity of the cellulose of the filter paper, which was determined to be 78%).

The nanocrystalline cellulose particles obtained had an average diameter within the range of from 5 nm to 15 nm (by number).

### EXAMPLE 2 - Nanocrystalline cellulose from cotton fiber

500 ml reactor vessel with attached mixer and condenser is charged with 100 g of EG. 3 g of MSA is added to form a first solvent mixture. The first solvent mixture is heated to 150°C. 20 g of cotton fiber (medical cotton balls) is added upon mixing. The reaction takes place at constant temperature 140°C to 150°C for 60 minutes under constant stirring. After 60 minutes the dissolution mixture so-obtained is cooled to room temperature.

The dissolution mixture is diluted with 1,4-dioxane (1:1 by vol.) and centrifuged at 8500 rpm for 15 minutes. The supernatant containing EG, dissolved cotton components and 1,4-dioxane is discarded. The sediment is dispersed in 200 g of 1,4-dioxane and centrifuged under similar conditions. This procedure is repeated 2 to 3 times until a white suspension of nanocrystalline cellulose is obtained after re-suspension in 1,4-dioxane. No aggregation or agglomeration of the nanocrystalline cellulose particles in suspension was observed.

The yield of the reaction was 67% of nanocrystalline cellulose, based on the total cellulose content in the cotton and a measured crystallinity of 75% of the cellulose.

The nanocrystalline particles had a number average diameter from 5 nm to 15 nm.

### EXAMPLE 3 - Nanocrystalline cellulose from cotton fiber

500 ml reactor vessel with attached mixer and condenser is charged with 100 g of a 1:1 (by weight) mixture of ethylene glycol (EG) and glycerol. 5 g of MSA is added to obtain a first solvent mixture. The solvent mixture is heated to 150°C. 20g of cotton fiber (medical cotton balls) is added upon mixing. The reaction takes place at constant temperature 140°C to 150°C for 60 minutes under constant stirring, and a dissolution mixture is obtained. After 60 minutes the dissolution mixture is cooled to room temperature.

The dissolution mixture is diluted with 1,4-dioxane (1:1 by vol.) and centrifuged at 8500 rpm for 15 minutes. The supernatant containing the first solvent mixture, dissolved wood components and 1,4-dioxane is discarded, the sediment is dispersed in 1,4-dioxane and centrifuged. The pellet is re-suspended in 1,4-dioxane and a homogenous white suspension is obtained. No aggregation or agglomeration of the nanocrystalline cellulose particles in suspension was observed.

### EXAMPLE 4 - Nanocrystalline cellulose from wood sawdust

A 500 ml glass reactor vessel with attached mixer and condenser was charged with 150 g of ethylene glycol (EG). 4,5 g of methyl sulfonic acid (MSA) was added to form the first solvent mixture. The first solvent mixture was heated to 140°C. 30g of wood sawdust was added while mixing. The dissolution reaction took place at constant temperature of 140°C to 150°C for 120 minutes under constant stirring. After 2 hours the dissolution mixture was cooled to room temperature.

The dissolution mixture was diluted (1:1 dilution by volume) with a 1,4-dioxane (second solvent mixture). The diluted dissolution mixture was centrifuged at 8500 RCF for 15 minutes in a Hettich Universal 320 centrifuge (Hettich GmbH, Tuttlingen, Germany). The supernatant containing first solvent mixture, dissolved wood components and the 1,4-dioxan is discarded. The sediment was re-suspended in 200 g of the second solvent mixture and centrifuged under the same conditions. The washing procedure was repeated twice. The sediment was re-suspended in second solvent mixture and a white suspension was obtained. No aggregation or agglomeration of the nanocrystalline cellulose particles in suspension was observed.

### EXAMPLE 5 - Nanocrystalline cellulose from wood sawdust (Comparative example)

A 500 ml glass reactor vessel with attached mixer and condenser was charged with 150 g of ethylene.glycol (EG). 4,5 g of methyl sulfonic acid (MSA) was added to form the first solvent mixture. The first solvent mixture was heated to 140°C. 30g of wood sawdust was added while mixing. The dissolution reaction took place at constant temperature of 140°C to 150°C for 120 minutes under constant stirring. After 2 hours the dissolution mixture was cooled to room temperature.

The dissolution mixture was diluted (1:1 dilution by volume) with a mixture of 80%(wt) 1,4-dioxane and 20%(wt) of water (the second solvent mixture). The diluted dissolution mixture was centrifuged at 8500 RCF for 15 minutes in a Hettich Universal 320 centrifuge (Hettich GmbH, Tuttlingen, Germany). The supernatant containing first solvent mixture, dissolved wood components and the second solvent mixture is discarded. The sediment is re-suspended in 200 g of the second solvent mixture and centrifuged under the same conditions. The washing procedure was repeated twice. The sediment was re-suspended in second solvent mixture and a white suspension was obtained.

However, due to the presence of substantial amounts of water in the second solvent mixture, a significant amount of agglomeration and aggregation was observed in the suspension.

## Claims

1. Method for the production of nanocrystalline cellulose from a cellulose-containing starting material, said method comprising:
(a) contacting said starting material with a first solvent mixture comprising at least one first organic solvent selected from the group consisting of ethylene glycol, diethylene glycol and glycerol and an acid catalyst, wherein said acid catalyst is a sulfonic acid having the general structure HO-SO₂-R, wherein R is an organic moiety, for a period of time sufficient to dissolve components of said starting material other than nanocrystalline cellulose in said solvent mixture, thereby obtaining nanocrystalline cellulose dispersed in a dissolution mixture;
(b) adding a second solvent mixture to said nanocrystalline cellulose dispersed in a dissolution mixture, said second solvent mixture comprising 1,4-dioxan with less than 10% (wt.) water, thereby obtaining nanocrystalline cellulose in a diluted dissolution mixture;
(c) separating said nanocrystalline cellulose from said diluted dissolution mixture by at least one filtration or centrifugation step.

2. Method of claim 1, wherein the first solvent mixture consists of a mixture of ethylene glycol and glycerol as the first organic solvent and methane sulfonic acid as acid catalyst.

3. Method of claim 1, wherein the first solvent mixture consists of a mixture of ethylene glycol as the first organic solvent and methane sulfonic acid as acid catalyst.

4. Method of claims 1 to 3, wherein the relative amount of said acid catalyst in said first solvent mixture is from 0.5% (wt.) to 20% (wt.), relative to the total weight of said first solvent mixture.

5. Method of any one of the preceding claims, wherein said starting material is, or comprises at least one of: wood, wood sawdust, paper, straw, hay, plant fibers, cellulose fibers, cotton fibers, and bagasse.

6. Method of any one of the preceding claims, wherein the weight ratio of said starting material to said first organic solvent is from 1:1 to 1:50 (w/w).

7. Method of any one of the preceding claims, wherein said starting material comprises particles, wherein at least 90% (wt.) of the particles have a particle size of 10 mm or less.

8. Method of any one of the preceding claims, wherein at least 90% by number of the particles of said nanocrystalline cellulose have particle widths of 100 nm or less.

9. Method of any one of the preceding claims, wherein said contacting is at a temperature of from 100°C to 200°C, for example from 120°C to 160°C.

10. Method of any one of the preceding claims, wherein the contacting is for a time period of from 10 to 300 minutes.

11. Method of any one of the preceding claims, said method further comprising at least one washing step.

12. Method of claim 11, wherein in said washing step 1,4-dioxan is used as a washing agent.

## Patentansprüche

1. Verfahren zur Herstellung nanokristalliner Zellulose aus einem zellulosehaltigen Ausgangsmaterial, wobei das Verfahren umfasst:
(a) In Kontakt bringen des genannten Ausgangsmaterials mit dem ersten Lösungsmittelgemisch, umfassend mindestens ein organisches Lösungsmittel, das ausgewählt ist aus der Gruppe, bestehend aus Ethylenglykol, Diethylenglyköl und Glycerin, sowie einem Säurekatalysator, wobei der genannte Katalysator Sulfonsäure mit der allgemeinen Struktur HO-SO₂-R ist, wobei R ein organischer Rest ist, für eine Zeitspanne, die ausreicht, um die Komponenten des Ausgangsmaterials, außer der nanokristallinen Zellulose in dem genannten Lösungsmittelgemisch zu lösen, wodurch nanokristalline Zellulose gewonnen wird, die in einem Auflösungsgemisch dispergiert ist;
(b) Zugabe eines zweiten Lösungsmittelgemisches zu der in einem Lösungsgemisch dispergierten nanokristallinen Zellulose, wobei das zweite Lösungsmittelgemisch 1,4-Dioxan mit weniger als 10 Gew.-% Wasser umfasst, wodurch nanokristalline Zellulose in einer verdünnten Auflösungsmischung gewonnen wird;
(c) Trennung nanokristalliner Zellulose vom genannten verdünnten Auflösungsgemisch durch mindestens einen Filtrations- oder Zentrifugationsschritt.

2. Verfahren nach Anspruch 1, wobei das erste Lösungsmittelgemisch aus einem Gemisch aus Ethylenglycol und Glycerin als die erste organische Lösung sowie Methansulfonsäure als Säurekatalysator besteht.

3. Verfahren nach Anspruch 1, wobei das erste Lösungsmittelgemisch aus einem Gemisch aus Ethylenglycol als das erste organische Lösung und Methansulphonsäure als Säurekatalysator besteht.

4. Verfahren nach den Ansprüchen 1 bis 3, wobei die relative Menge des Säurekatalysators im genannten ersten Lösungsmittelgemisch 0,5 Gew.-% bis 20 Gew.-%, bezogen auf das Gesamtgewicht des ersten Lösungsmittelgemisches, enthält.

5. Verfahren nach einem der vorhergehenden Ansprüche, wobei das Ausgangsmaterial Holz, Holzsägemehl, Papier, Stroh, Heu, Pflanzenfasern, Zellulosefasern, Baumwollfasern oder Bagasse ist oder mindestens einen davon umfasst.

6. Verfahren nach einem der vorhergehenden Ansprüche, wobei das Gewichtsverhältnis des Ausgangsmaterials zu dem ersten organischen Lösungsmittel zwischen 1 : 1 und 1 : 50 (w/w) beträgt.

7. Verfahren nach einem der vorhergehenden Ansprüche, wobei das Ausgangsmaterial Partikel umfasst, wobei mindestens 90 Gew.-% der Partikel eine Partikelgröße von 10 mm oder weniger aufweisen.

8. Verfahren nach einem der vorhergehenden Ansprüche, wobei mindestens 90 % der Anzahl der Partikel nanokristalliner Zellulose Partikelbreiten von 100 nm oder weniger aufweisen.

9. Verfahren nach einem der vorhergehenden Ansprüche, wobei das in Kontakt bringen bei einer Temperatur von 100°C bis 200°C erfolgt, beispielsweise von 120°C bis 160°C.

10. Verfahren nach einem der vorhergehenden Ansprüche, wobei das in Kontakt bringen über einen Zeitraum von 10 bis 300 Minuten erfolgt.

11. Verfahren nach einem der vorhergehenden Ansprüche, wobei das Verfahren außerdem mindestens einen Waschschritt umfasst.

12. Verfahren nach Anspruch 11, wobei in dem Waschschritt 1,4-Dioxan als Waschmittel verwendet wird.

## Revendications

1. Procédé de production de cellulose nanocristalline à partir d'une matière première contenant de la cellulose, ledit procédé consistant :
(a) à mettre en contact ladite matière de départ avec un premier mélange de solvants comprenant au moins un premier solvant organique choisi dans le groupe constitué par l'éthylène glycol, le diéthylène glycol et le glycérol, et un catalyseur acide, ledit catalyseur acide étant un acide sulfonique ayant la structure générale HO-SO₂-R, où R est une fraction organique, pendant une durée suffisante pour dissoudre des composants de ladite matière première autre que la cellulose nanocristalline dans ledit mélange de solvants, ce qui permet d'obtenir de la cellulose nanocristalline dispersée dans un mélange de dissolution ;
(b) à ajouter un second mélange de solvants à ladite cellulose nanocristalline dispersée dans un mélange de dissolution, ledit deuxième mélange de solvants comprenant du 1,4-dioxan avec moins de 10 % (en poids) d'eau, ce qui permet d'obtenir de la cellulose nanocristalline dispersée dans un mélange de dissolution dilué ;
(c) à séparer ladite cellulose nanocristalline dudit mélange de dissolution dilué par au moins une étape de filtration ou de centrifugation.

2. Procédé selon la revendication 1, dans lequel le premier mélange de solvants est constitué d'un mélange d'éthylène glycol et de glycérol en tant que premier solvant organique et d'acide méthane sulfonique en tant que catalyseur acide.

3. Procédé selon la revendication 1, dans lequel le premier mélange de solvants est constitué d'un mélange d'éthylène glycol en tant que premier solvant organique et d'acide méthane sulfonique en tant que catalyseur acide.

4. Procédé selon les revendications 1 à 3, dans lequel la quantité relative dudit catalyseur acide dans ledit premier mélange de solvants est de 0,5 % (en poids) à 20 % (en poids), par rapport au poids total dudit premier mélange de solvants.

5. Procédé selon l'une quelconque des revendications précédentes, dans lequel ladite matière première est, ou comprend au moins un des éléments suivants : bois, sciure de bois, papier, paille, foin, fibres végétales, fibres de cellulose, fibres de coton et bagasse.

6. Procédé selon l'une quelconque des revendications précédentes, dans lequel le rapport pondéral de ladite matière première audit premier solvant organique est de 1 : 1 à 1 : 50 (p/p).

7. Procédé selon l'une quelconque des revendications précédentes, dans lequel ladite matière première comprend des particules, au moins 90 % (en poids) des particules ayant une taille de 10 mm ou moins.

8. Procédé selon l'une quelconque des revendications précédentes, dans lequel au moins 90 % en nombre des particules de ladite cellulose nanocristalline ont des largeurs de particule de 100 nm ou moins.

9. Procédé selon l'une quelconque des revendications précédentes, dans lequel ladite mise en contact a lieu à une température de 100 °C à 200 °C, par exemple de 120 °C à 160 °C.

10. Procédé selon l'une quelconque des revendications précédentes, dans lequel la mise en contact est effectuée pendant une durée de 10 à 300 minutes.

11. Procédé selon l'une quelconque des revendications précédentes, ledit procédé comprenant en outre au moins une étape de lavage.

12. Procédé selon la revendication 11, dans lequel le 1,4-dioxan est utilisé en tant qu'agent de lavage dans ladite étape de lavage.
